# EUROPEAN PATENT APPLICATION

(11) **EP 3 005 856 A1**
(43) Date of publication of application: **13.04.2016**
(21) Application number: 14801482.2
(22) Date of filing: 23.05.2014
(51) Int. Cl.: A01G 9/10

(54) **CONTAINER CONSISTING OF GEOTEXTILE FELT, FOR PLANTS**

(30) Priority: 24.05.2013 ES 201300490 U
(71) Applicant: Cano Torres, Manuel, 08780 Pallejá (Barcelona) (ES)
(72) Inventor: Cano Torres, Manuel, 08780 Pallejá (Barcelona) (ES)
(74) Representative: Gil-Vega, Victor
(86) International application number: PCT/ES2014/000081
(87) International publication number: WO 2014/188022

(57) **Abstract**

Once the various constituent parts of the container are cut, two parts are joined as in figure 1, on the pattern designing table, by means of a 5-thread seam, additional parts being successively joined in this way on the sides thereof, until four parts are assembled, forming a cylinder or a trunk of a truncated pyramid. A square is then joined as in fig. 2 by means of a 5-thread seam in the lower part of fig. 3 and fig. 4, or the smallest square detached from the trunk of the truncated pyramid produced. Finally, a container is produced, joining four isosceles trapeziums on the sides thereof and a square in the lower part, thereby joining all of the parts on one of the ends thereof fig. 4. All of the seams are then reinforced by means of thermosealing (according to the model), using a conventional thermosealing machine at 220°-240° in order to melt the felt. A 1 cm hem is made by means of a linear seam, adding the tag of the product into said seam fig. 7. The containers of more than 15 litres comprise a reinforcement in the upper part thereof fig. 5, acting as handles. Inside the container is a piece of felt as in fig. 6. Depending on requirements, the product can also be made with a 5-thread overlocking machine.

## Description

### Object of the invention

The present invention relates to the textile industry and, as stated in the title of this specification, relates to containers made of 100% polyester felt, that have been designed and manufactured to obtain many significant advantages, compared with other existing geo-textile units that are intended for the same purpose.

### Background of the invention

Geo-textile felt containers are generally known outside Spain, and provide substantial advantages when compared to the usual plastic containers. One example of such a container could be the one described in US patent 5766825. All geo-textile felt containers are always circular or cylindrical in shape. They usually consist of two pieces sewn together through a single seam. Made of cotton or polyester yarn. The outer surface of the felt of these containers is subject to an ironing treatment and they have a thickness of 1.5 mm, which does not allow them to preserve their structure by themselves. They have neither seams nor handles that reinforce the structure, or hems made at the ends or finishes.

No coating or upper lid has been provided for the substrate. Notwithstanding the foregoing, experience has shown that it is possible to notably improve the quality, durability and effectiveness of the product and, consequently, we have devised a new design which involves significant improvements.

### Description of the invention

One of the amendments introduced by this utility model is the change from a cylindrical to a conical format, which allows to dismantle or transplant the plants of the container, and such container can be used for an indefinite period of time without the need for breaking or discarding it.

It has been evidenced that a cylindrical format prevents the disassembling the container or separating it from the substrate, since roots are inserted into the fibres, while if it is changed to a conical format, the transplanting or separation of the substrate from the container are facilitated.

Geo-textile felt containers currently available in the market are made of cotton or polyester yarn, that are not resistant to moisture, which causes the opening of the seams, as a result of the passage of time or by normal wear and tear.

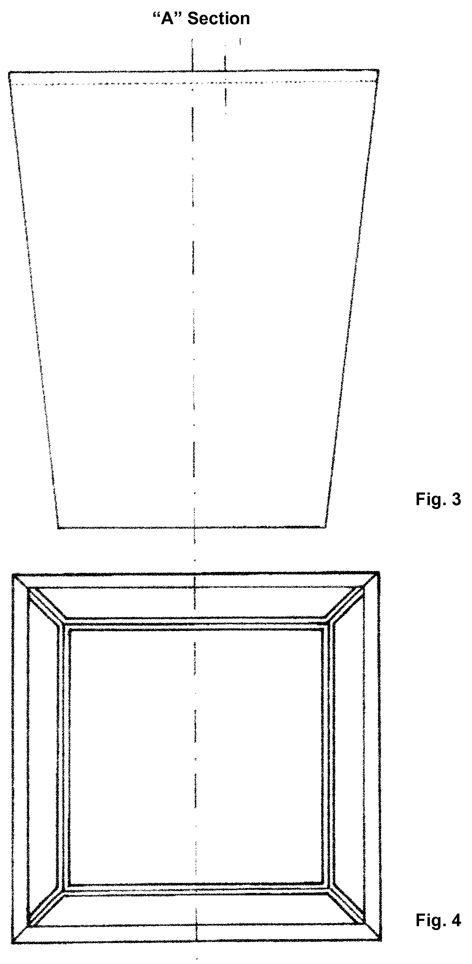

These changes in the utility model are based on the manufacturing of the product using a nylon thread (fishing line), which resists moisture deterioration and will notably extend the useful life of the product. The remaining seams that are not exposed at the outer side of the container will be heat-sealed (depending on the model), as it can be appreciated in Figure 4.

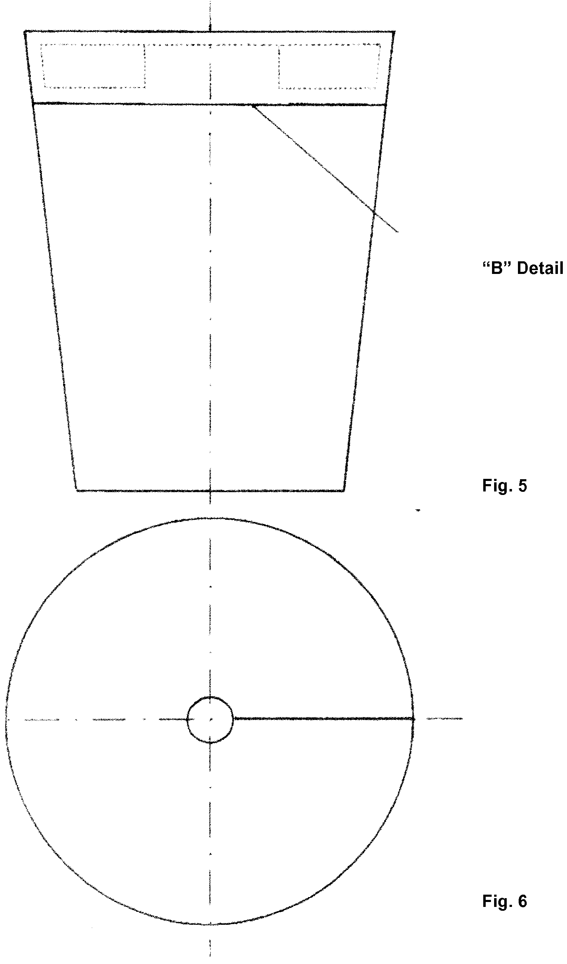

Geo-textile felt containers presently available in the market do not offer any protection for the substrate, and this utility model uses a lid or substrate covering made of felt, which is of the same size as the upper diameter of the container which, despite being square at the time of its manufacturing, it finally becomes round as a result of the pressure exercised by the earth. Such lid prevents the spread of pests, mould and weeds, as it can be appreciated in Fig. 6.

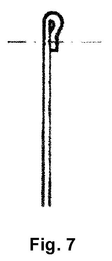

The upper finishing of other Geo-textile felt containers available in the market does neither include handles nor reinforcements, but this utility model incorporates reinforcements in the upper areas, thus notably increasing the stiffness of the upper part, providing firmness at the fixing area and preventing bends (Fig. 7 and Fig. 3). In the case of containers with more than 15 litre capacity, a felt reinforcement has been incorporated around the upper area, as indicated in Fig. 5, which is used both as a handle and as a reinforcement.

Finally, the fibre density and thickness found in other containers available in the market are different from those used for this Utility Model, including the ironing of the outer face, which is not used in this model, since the density of fibres has been dimensioned, thus increasing the durability and resistance of the product, preventing breaks and wear and tear and maintaining all the advantages derived from the aeration of the roots.

The material used for this utility model is 100% polyester high density felt, with a thickness of 1.5 mm and resistant to extreme temperatures (max. 220 degrees).

### Brief description of drawings

- Figure 1.-: Shows a side view of one of the 4 side sections forming the truncated pyramid of the container.
- Figure 2.-: Shows a side view of the lower section of the container which is used to join the truncated pyramid.
- Figure 3.-: Shows a side view of the geo-textile container corresponding to the models of less than 15 litres capacity, without handles, already finished.
- Figure 4.-: Shows a plan view of the geo-textile container, valid for all models, wherein a detailed view of the joints of the different parts that comprise it is shown.
- Figure 5.-: Shows a side view of the geo-textile container, corresponding to the models with more than 15 litres capacity, incorporating upper reinforcements and handles, showing a detail of the reinforcement seams, that are also used as handles.
- Figure 6.-: Shows a side view of the part attached to the container, which is made of the same material and used as an upper lid to cover the substrate, with a cross-section cut along the centre.
- Figure 7.-: Shows a cross section of the finishing of the ends.

### Description of a preferred embodiment.

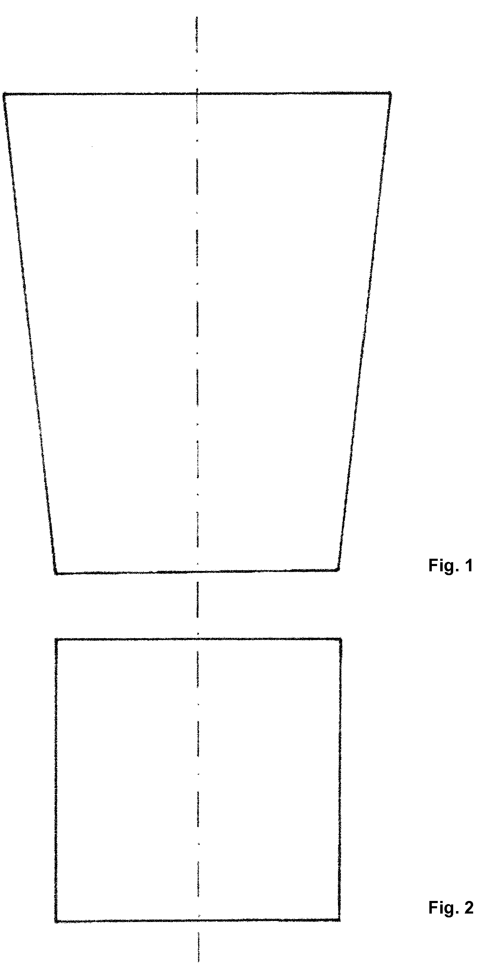

Once all the different parts comprising the container have been cut at the cutting desk, two pieces similar to those shown in Fig. 1 will be joined by means of a 5-thread seam and so on until 4 pieces have been joined to obtain a cylinder or truncated pyramid.

Subsequently, a square (Fig. 2) will be joined by means of another 5-thread seam at the bottom part shown in Fig. 3 and Fig. 4, i.e., the smaller square obtained at the end of the truncated pyramid which has been previously sewn. The container will be finally obtained by joining 4 isosceles trapezoids by their sides plus an square at the bottom, and joining all the pieces at one of their ends (Fig. 4).

Then, all seams will be reinforced by means of heat sealing (depending on the model) using a conventional textile heat sealing machine at a temperature of 220°-240°, to melt the felt.

A hem of 1 cm is made by means of a linear seam, and the product label is fixed to this last seam, as it can be seen in Fig. 7.

Containers of more than 15 litres incorporate a reinforcement on the upper part of the container (Fig. 5) which is also used as a handle.

A piece of felt is included inside the container, as shown in Fig. 6.

Depending on the specific requirements, the product can also be made with a 5-thread Overlock sewing machine, using nylon thread.

## Claims

1. A container, planter or flower pot made of geo-textile felt, **characterised in that** it comprises 4 pieces of geo-textile felt in the shape of an isosceles trapezoid (Fig. 1) plus another squared piece (Fig. 2), that have been sewn together to obtain a truncated pyramid, as it can be appreciated in the side and plan views attached as Fig. 3 and Fig. 4.

2. A container, planter or flower pot made of geo-textile felt according to claim 1, **characterised in that** it is sewn with a nylon thread or joined by means of heat sealing, depending on the model.

3. A container, planter or flower pot made of geo-textile felt according to claim 1, **characterised in that** it comprises a hem at the upper part, which is 6 cm thick, the said hem including reinforcements made of nylon thread, according to Fig. 5, that are used as handles (Fig. 5, Detail B) to manipulate the container (this shall be applicable to containers, planters or flower pots with more than 15 litres capacity).

4. A container, planter or flower pot made of geo-textile felt according to claim 1, **characterised in that** it comprises at all the ends or finishes a hem of 1 cm made of nylon thread, according to Fig. 7 (this shall be applicable to containers, planters or flower pots with less than 15 litres capacity).

5. A container, planter or flower pot made of geo-textile felt according to claim 1, **characterised in that** it comprises a piece made of the same material as the geo-textile felt container, according to Fig.6, which is independent from the container and is neither joined nor sewn to the former, but which is included as part of the container assembly.
